(19) Europäisches Patentamt
European Patent Office
Office européen des brevets

(11) **EP 3 076 529 A1**

(12) **EUROPÄISCHE PATENTANMELDUNG**

(43) Veröffentlichungstag:
**05.10.2016 Patentblatt 2016/40**

(51) Int Cl.:
*H02K 21/40* (2006.01)     *H02K 1/17* (2006.01)
*H02K 1/20* (2006.01)

(21) Anmeldenummer: **15162240.4**

(22) Anmeldetag: **01.04.2015**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**MA**

(71) Anmelder: **Siemens Aktiengesellschaft**
**80333 München (DE)**

(72) Erfinder:
• **Volkmuth, Benjamin**
**97717 Sulzthal (DE)**
• **Vollmer, Rolf**
**36129 Gersfeld (DE)**

(54) **ELEKTRISCHE ROTIERENDE MASCHINE MIT LATERAL MAGNETISIERTEN LINSENFÖRMIGEN MAGNETEN**

(57)     Die Erfindung betrifft eine elektrische rotierende Maschine (1) mit einem Außenstator (2), einem Innenstator (10), welcher konzentrisch zu dem Außenstator (2) innerhalb des Außenstators (2) angeordnet ist, einem Rotor (7) welcher konzentrisch zu dem Außenstator (2) und dem Innenstator (10) zwischen dem Außenstator (2) und dem Innenstator (10) angeordnet ist und welcher relativ zu dem Außenstator (2) und dem Innenstator (10) bewegbar ist und einem inneren Luftspalt (13), welcher zwischen dem Rotor (7) und dem Innenstator (10) angeordnet ist, wobei der Innenstator (10) eine Mehrzahl von Permanentmagneten (12) aufweist. Um, im Vergleich zum Stand der Technik, einen höheren Wirkungsgrad bei geringerer Masse und niedrigere Kosten zu erzielen, wird vorgeschlagen, dass jeder einzelne Permanentmagnet (12) auf der dem inneren Luftspalt (13) zugewandten Seite einen Nordpol (N) und einen Südpol (S) aufweist.

FIG 1

EP 3 076 529 A1

**Beschreibung**

Die Erfindung betrifft eine elektrische rotierende Maschine mit einem Außenstator, einem Innenstator, welcher konzentrisch zu dem Außenstator innerhalb des Außenstators angeordnet ist, einem Rotor welcher konzentrisch zu dem Außenstator und dem Innenstator zwischen dem Außenstator und dem Innenstator angeordnet ist und welcher relativ zu dem Außenstator und dem Innenstator bewegbar ist und einem inneren Luftspalt, welcher zwischen dem Rotor und dem Innenstator angeordnet ist, wobei der Innenstator eine Mehrzahl von Permanentmagneten aufweist.

Weiterhin betrifft die Erfindung eine Windkraftanlage mit einem Generator, wobei der Generator eine derartige elektrische rotierende Maschine aufweist.

Die Erfindung betrifft ferner einen Antrieb für ein elektrisch angetriebenes Fluggerät oder ein elektrisch angetriebenes Fahrzeug oder ein elektrisches Traktionsfahrzeug mit einer derartigen elektrischen rotierenden Maschine.

Elektrische Maschinen sind beispielsweise als Synchronmaschinen, insbesondere als Drehstromsynchronmaschinen, ausgebildet. Derartige Drehstromsynchronmaschinen können beispielsweise als Motor oder auch als Generator betrieben werden und kommen beispielsweise in Windkraftanlagen und Flugzeugantrieben vor, die beispielsweise als permanenterregte Drehstromsynchronmaschinen ausgebildet sind. Des Weiteren sind elektrische Maschinen bekannt, die einen Außenstator und einen Innenstator aufweisen, zwischen denen ein Rotor angeordnet ist. Solche Doppelstatormaschinen benötigen im Innenstator einen magnetischen Rückschluss, der aus weichmagnetischem Eisen hergestellt wird. Dadurch wird der Innenstator massereicher, benötigt zusätzlich das Material Eisen und hat damit auch, verglichen mit Aluminium oder Kupfer, eine schlechtere Wärmeleitfähigkeit zu den Magneten.

Aus EP 2 528 207 A1 ist eine elektrische Maschine, umfassend einen ersten Stator mit einer Reihe von magnetischen Elementen, welche dafür vorgesehen sind eine vorgegebene Anzahl von magnetischen Polpaaren zu bilden, und einen angeschlossenen zweiten Stator, welcher von dem ersten Stator durch einen Luftspalt getrennt ist und welcher Ankerwicklungen mit einer oder mehr Phasen aufweist, welche eine vorgegebene Anzahl von Magnetpolpaaren bilden, bekannt.

In der älteren Anmeldung EP 14163031.9 wird eine elektrische Maschine mit einem Außenstator, einem Innenstator, der konzentrisch zu dem Außenstator innerhalb des Außenstators angeordnet ist, und einem Rotor, der konzentrisch zu dem Außenstator und dem Innenstator zwischen dem Außenstator und dem Innenstator angeordnet ist und der relativ zum Außenstator und zum Innenstator bewegbar ist, vorgeschlagen, wobei der Außenstator eine Mehrzahl von Wicklungen aufweist, der Innenstator eine Mehrzahl von Permanentmagneten aufweist, und der Rotor ein Trägerelement umfasst, das aus einem amagnetischen Material gebildet ist und das eine Mehrzahl von Aussparungen aufweist, in denen jeweils ein weichmagnetisches Segment angeordnet ist.

In der ebenfalls noch nicht veröffentlichten EP-Anmeldung 14183004.2 wird eine permanenterregte dynamoelektrische Maschine mit einem Stator und einem um eine Achse rotierbaren Rotor vorgeschlagen, wobei der Stator ein Wicklungssystem aufweist, das in Nuten eines einen magnetischen Rückschluss bildenden Materials eingebettet ist und mit einem Permanentmagneten des Rotors über einen Luftspalt zwischen Stator und Rotor elektromagnetisch wechselwirkt, wobei die Permanentmagnete auf dem Rotor angeordnet sind, wobei jeder einzelne Permanentmagnet auf der dem Luftspalt zugewandten Seite einen Nord- und einen Südpol aufweist.

Der Erfindung liegt die Aufgabe zugrunde, eine elektrische Maschine der eingangs genannten Art bereitzustellen, welche, im Vergleich zum Stand der Technik, einen höheren Wirkungsgrad bei geringerer Masse aufweist und kostengünstiger ist.

Diese Aufgabe wird erfindungsgemäß durch eine elektrische rotierende Maschine gelöst mit einem Außenstator, einem Innenstator, welcher konzentrisch zu dem Außenstator innerhalb des Außenstators angeordnet ist, einem Rotor welcher konzentrisch zu dem Außenstator und dem Innenstator zwischen dem Außenstator und dem Innenstator angeordnet ist und welcher relativ zu dem Außenstator und dem Innenstator bewegbar ist und einem inneren Luftspalt, welcher zwischen dem Rotor und dem Innenstator angeordnet ist, wobei der Innenstator eine Mehrzahl von Permanentmagneten aufweist, , wobei jeder einzelne Permanentmagnet auf der dem inneren Luftspalt zugewandten Seite einen Nordpol und einen Südpol aufweist.

Weiterhin wird die Aufgabe durch eine Windkraftanlage mit einem Generator gelöst, wobei der Generator eine derartige elektrische rotierende Maschine aufweist.

Die Aufgabe wird ferner durch einen Antrieb für ein elektrisch angetriebenes Fluggerät oder ein elektrisch angetriebenes Fahrzeug oder ein elektrisches Traktionsfahrzeug mit einer derartigen elektrischen rotierenden Maschine gelöst.

Eine elektrische rotierende Maschine mit einem Außenstator, einem konzentrisch zum Außenstator angeordnetem Innenstator und einem konzentrisch zum Außenstator und zum Innenstator zwischen dem Außenstator und dem Innenstator angeordnetem Rotor wird auch Doppelrotormaschine genannt. Die speziellen Permanentmagnete, welche auf der dem inneren Luftspalt zugewandten Seite einen Nordpol und einen Südpol aufweisen, verfügen über eine laterale Magnetisierung. Dabei weist eine Seite der einzelnen Permanentmagnete beide Pole, also Nord-und Südpol auf. Vorteilhafterweise wird dabei das Magnetmaterial auf die durch die Feldlinien durchsetzten Materialien des Permanentmagneten reduziert und es ist kein magnetischer Rückschluss wie bei klassischen Permanentmagneten über beispielsweise ein Eisenpaket notwendig.

Durch die Bereitstellung einer permanenterregten Drehstromsynchronmaschine, bei der die Permanentmagneten auf dem Innenstator angeordnet sind, müssen die Permanentmagnete der elektrischen rotierenden Maschine nicht bewegt werden. Somit kann Wärme, die im Betrieb der elektrischen Maschine entsteht, einfacher von dem Permanentmagneten abgeführt werden als bei elektrischen rotierenden Maschinen, bei denen die Permanentmagneten im Rotor vorgesehen sind.

Bei einer bevorzugten Ausführungsform weist der Außenstator eine Mehrzahl von Wicklungen auf. Zu diesem Zweck kann der Außenstator entsprechende Nuten aufweisen, in denen die Wicklungen angeordnet sind.

In einer weiteren vorteilhaften Ausgestaltung weist der Innenstator ein Blechpaket auf, welches aus einem Leichtmetall, insbesondere Aluminium, hergestellt ist. Durch das Leichtmetall im Innentator wird die Masse des Innentators reduziert. Damit wird der Motor insgesamt leichter und das Drehmoment/Masse-Verhältnis steigt.

Auf besonders vorteilhafte Weise sind die Permanentmagnete direkt mit dem Blechpaket des Innenstators verbunden. Dies ist möglich, da die lateral magnetisierten Permanentmagnete keinen Eisenrückschluss im Innenstator benötigen. Das Blechpaket, welches bevorzugt aus Aluminium besteht, hält, fixiert und positioniert demnach die Permanentmagnete. Daher erfolgt die Kühlung der direkt an den Innenstator angebundenen Permanentmagnete besonders effizient, da das amagnetische Aluminium eine größere Wärmeleitfähigkeit aufweist als Eisen und das schlechter wärmeleitende Eisen wegfällt.

In einer bevorzugten Ausführungsform sind die Permanentmagnete des Innenstators in Umfangsrichtung nahezu lückenlos angeordnet und bedecken die dem inneren Luftspalt zugewandte Oberfläche des Innenstators nahezu komplett. Dies ist besonders vorteilhaft, da durch die nahezu komplette Polbedeckung der Permanentmagnete am Umfang eine Drehmomentsteigerung bei einer gleichzeitigen Optimierung des Magnetvolumens geschaffen wird. Dies reduziert die Herstellungskosten und ermöglicht Rotoren herzustellen, die zum einen mit großem Durchmesser, als auch mit geringer Trägheit ausgebildet sind.

In einer weiteren vorteilhaften Ausgestaltung sind die Permanentmagnete linsenförmig, trapezförmig oder schalenförmig ausgeführt. Durch diese Formgebung ist es möglich, dass sich ein nahezu konstanter Luftspalt zwischen dem Innenstator und dem Rotor einstellt. Die Form der Permanentmagnete hängt von der erforderlichen Drehmomentbildung, den geometrischen Abmessungen und von der erforderlichen oder angestrebten Luftspaltinduktion ab.

Auf besonders vorteilhafte Weise sind die Permanentmagnete derartig ausgeführt, dass der vom inneren Luftspalt abgewandte Abschnitt der Permanentmagnete im Wesentlichen der magnetischen Vorzugsrichtung folgt. Entscheidend dabei ist, dass durch die laterale Magnetisierung der derartigen geformten Permanentmagnete kein zusätzliches Rückschlussmaterial innerhalb des Rotors vorgesehen werden muss, da sowohl die magnetische Polbildung als auch die Magnetfeldführung im Permanentmagneten erfolgt.

Bei einer bevorzugten Ausführungsform umfasst der Rotor ein Trägerelement, welches aus einem amagnetischen Material hergestellt ist und eine Mehrzahl von Aussparungen aufweist, in denen jeweils ein weichmagnetisches Segment angeordnet ist. Ein amagnetisches Material ist üblicherweise durch ein magnetisches Feld nicht beeinflussbar. In das Trägerelement ist eine Mehrzahl von weichmagnetischen Segmenten eingebettet. Da der Innenstator der elektrischen rotierenden Maschine ferner eine Mehrzahl von Permanentmagneten aufweist, kann eine permanenterregte Drehstromsynchronmaschine bereitgestellt werden, bei der die Permanentmagneten im Betrieb der elektrischen rotierenden Maschine nicht bewegt werden. Somit kann Wärme, die im Betrieb der elektrischen Maschine rotierenden entsteht, einfacher von den Permanentmagneten abgeführt werden als bei elektrischen rotierenden Maschinen, bei denen die Permanentmagneten im Rotor angeordnet sind.

In einer weiteren vorteilhaften Ausgestaltung sind die Permanentmagnete des Innenstators aus einem Ferrit hergestellt. Ferrite sind elektrisch schlecht oder nicht leitende ferrimagnetische keramische Werkstoffe. Übliche Materialien sind zum Beispiel Strontium-Ferrite, Barium-Ferrite und Cobalt-Ferrite. Derartige Permanentmagnete sind im Gegensatz zu Seltenerdmagneten kostengünstiger.

Bevorzugt enthalten die Permanentmagnete des Innenstators Neodym-Eisen-Bor. Neodym-Eisen-Bor ist eine Legierung aus Neodym, Eisen und Bor, aus der als die derzeit stärksten Permanentmagnete hergestellt werden. Weiterhin gehört der Werkstoff Neodym-Eisen-Bor zu den Seltenerdmagneten. Derartige Permanentmagnete des Innenstators, die Eisen, Neodym und/oder Bor aufweisen, zeichnen sich weiterhin durch eine hohe Temperaturbeständigkeit aus.

Auf vorteilhafte Weise weist die elektrische rotierende Maschine eine erste Kühleinrichtung zum Kühlen der Permanentmagnete des Innenstators auf. Als Kühlmittel somit kann die im Betrieb der elektrischen Maschine entstehende Wärme zuverlässig von den Permanentmagneten des Innenstators abgeführt werden. Auf diese Weise kann verhindert werden, dass die Permanentmagneten entmagnetisiert werden. Somit können Magnete mit einer geringeren Koerzitivfeldstärke eingesetzt werden. Dies bedeutet wiederum, dass Permanentmagneten mit einem geringeren Anteil an Seltenen Erden verwendet werden können. Auf diese Weise kann die Remanenz erhöht und die Kosten reduziert werden.

Bevorzugt weist die elektrische Maschine eine zweite Kühleinrichtung zum Kühlen des Außenstators auf. Durch die zweite Kühleinrichtung kann verhindert werden, dass die Wicklungen des Außenstators im Betrieb der elektrischen Maschine überhitzt und somit gegebenenfalls beschädigt werden. Auf diese Weise wird ein zuverlässiger Betrieb der elektrischen Maschine ermöglicht.

Weiterhin ist es vorteilhaft, wenn die erste Kühleinrichtung und/oder die zweite Kühleinrichtung eine Mehrzahl von Kühlrohren aufweisen, die von einer Kühlflüssigkeit durchströmt sind. Als Kühlflüssigkeit kann beispielsweise Wasser oder ein Wasser-Glykol-Gemisch verwendet werden. Entsprechende Kühlrohre können einfach und kostengünstig gefertigt werden. In einer Ausgestaltung sind die Kühlrohre in einem Blechpaket des Innenstators und/oder in einem Eisenpaket des Außenstators angeordnet. Beispielsweise können die Kühlrohre der ersten Kühleinrichtung und/oder der zweiten Kühleinrichtung durch entsprechende Bohrungen, die in das jeweilige Eisenpaket eingebracht sind, bereitgestellt werden. Derartige Kühlrohre sind einfach und kostengünstig zu fertigen.

Im Folgenden wird die Erfindung anhand der in den Figuren dargestellten Ausführungsbeispiele näher beschrieben und erläutert.

Es zeigen:

FIG 1    einen Querschnitt einer Ausführungsform einer erfindungsgemäßen elektrischen rotierenden Maschine,

FIG 2    einen Längsschnitt der Ausführungsform der elektrischen rotierenden Maschine gemäß FIG 1,

FIG 3    eine perspektivische Darstellung eines Teils eines Innenstators mit linsenförmigen lateral magnetisierten Permanentmagneten,

FIG 4    einen Querschnitt eines Teils eines Innenstators mit trapezförmigen lateral magnetisierten Permanentmagneten,

FIG 5    eine perspektivische Darstellung eines Teils eines Innenstators mit schalenförmigen lateral magnetisierten Permanentmagneten,

FIG 6    einen Längsschnitt einer Gondel einer Windkraftanlage und

FIG 7    einen Längsschnitt eines elektrisch angetriebenen Fahrzeugs.

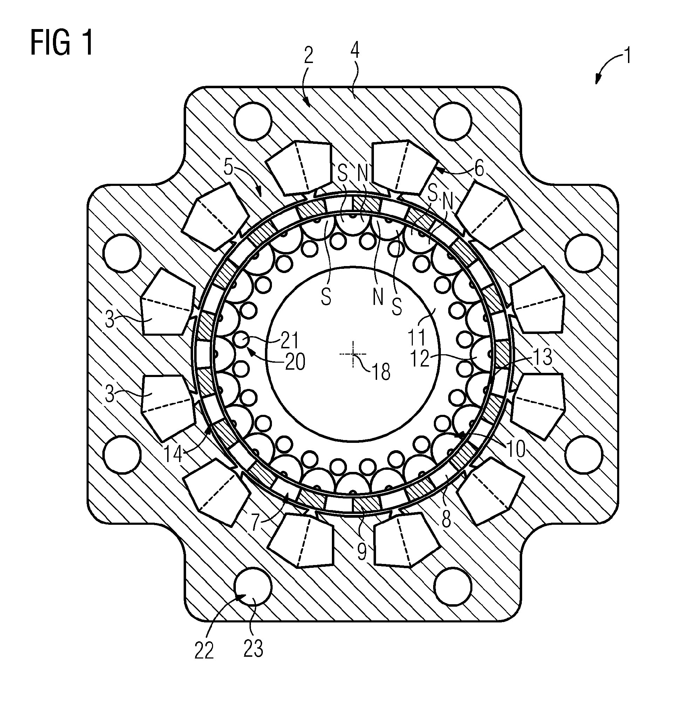

FIG 1 zeigt einen Querschnitt einer Ausführungsform einer erfindungsgemäßen elektrischen rotierenden Maschine 1. Die elektrische rotierende Maschine 1 weist einen Außenstator 2 auf. Der Außenstator 2 weist ein Eisenpaket 4 auf, das eine Mehrzahl von Zähnen 5 mit dazwischenliegenden Nuten 6 aufweist. In die Nuten 6 sind entsprechende Wicklungen 3 eingebracht. Die Wicklungen 3 sind üblicherweise mit einem hier nicht dargestellten Drehstromnetz elektrisch verbunden. Innerhalb des Außenstators 2 ist ein Rotor 7 angeordnet. Der Rotor 7 ist dabei konzentrisch zu dem Außenstator 2 um seine Rotationsachse 18 angeordnet. Zwischen dem Rotor 7 und dem Außenstator 2 befindet sich ein zweiter Luftspalt 14. Der Rotor 7 weist ein Trägerelement 8 auf, das aus einem amagnetischen Material gebildet ist. Das Trägerelement 8 weist mehrere Aussparungen auf, in die jeweils weichmagnetische Segmente 9 eingebettet sind. Des Weiteren weist die elektrische rotierende Maschine 1 einen Innenstator 10 auf. Der Innenstator 10 ist konzentrisch um die Rotationsachse 18 des Rotors 7 innerhalb des Rotors 7 angeordnet. Zwischen dem Rotor 7 und dem Innenstator 10 befindet sich ein erster Luftspalt 13. Der Innenstator 10 umfasst ein Blechpaket 11, welches eine Mehrzahl von Aussparungen aufweist, in denen jeweils ein Permanentmagnet 12 angeordnet ist, wobei die Permanentmagnete 12 direkt mit dem Blechpaket 11 des Innenstators 10 verbunden sind. Jeder einzelne Permanentmagnet 12 ist lateral magnetisiert, das heißt man kann sich diesbezüglich einen Stabmagneten vorstellen, dessen Enden, also die Pole einander zugewandt - im Extremfall nahezu zusammengeklappt werden, und weist auf der dem inneren Luftspalt 13 zugewandten Seite einen Nordpol N und einen Südpol S auf. Dies hat den Vorteil, dass das Magnetmaterial auf die durch die Feldlinien durchsetzten Materialien des Permanentmagneten reduziert wird und kein magnetischer Rückschluss wie bei klassischen Permanentmagneten über beispielsweise ein Eisenpaket notwendig ist. Deshalb kann das Blechpaket 11 des Innenstators 10 aus Aluminium oder einem anderen, auch amagnetischen, Leichtmetall hergestellt sein. Weiterhin sind die lateral magnetisierten Permanentmagnete 12 des Innenstators 10 in Umfangsrichtung des Innenstators 10 entlang des inneren Luftspalts 13 nahezu lückenlos angeordnet und bedecken die dem inneren Luftspalt 13 zugewandte Oberfläche des Innenstators 10 nahezu komplett. Eine elektrische rotierende Maschine 1 mit einem Außenstator 2, einem konzentrisch zum Außenstator 2 angeordnetem Innenstator 10 und einem konzentrisch zum Außenstator 2 und zum Innenstator 10 zwischen dem Außenstator 2 und dem Innenstator 10 angeordnetem Rotor 7 wird auch Doppelrotormaschine genannt.

Die lateral magnetisierten Permanentmagnete 12 der elektrischen rotierenden Maschine 1 in FIG 1 sind schalenförmig ausgeführt, es ist aber auch beispielsweise eine linsenförmige oder trapezförmige Ausführung möglich.

Ein magnetischer Pol N oder S des Innenstators 7 wird durch zwei aneinander liegende gleichnamige Pole N, N oder S, S eines Permanentmagneten 12 gebildet. Die Permanentmagnete 12 sind weiterhin derartig ausgeführt, dass der vom inneren Luftspalt 13 abgewandte Abschnitt der Permanentmagnete 12 im Wesentlichen der magnetischen Vorzugsrichtung 26 folgt. Die Permanentmagneten 12 können beispielsweise aus einem Ferrit gefertigt sein und/oder beispielsweise Neodym-Eisen-Bor enthalten.

In dem vorliegenden Ausführungsbeispiel weist der Außenstator 2 bzw. weisen dessen Wicklungen 3 die Polpaarzahl pw = 5 auf. Der Innenstator 10 bzw. dessen Permanentmagneten 12 weisen die Polpaarzahl pm = 12 auf. Der Rotor 7 weist vorliegend 17 weichmagnetische Segmente 9 auf. Somit ist die Polpaarzahl des Rotors pr = 17. Dabei entspricht die nach außen wirksame Polpaarzahl der Polpaarzahl des Rotors. Allgemein können die Polpaarzahlen der elektrischen rotierenden Maschine 1 nach folgender Formel kombiniert werden:

$$pr = |pm +/- pw|.$$

Die elektrische Maschine 1 in FIG 1 weist eine erste Kühleinrichtung 20 zum Kühlen des Innenstators 10 auf. Die erste Kühleinrichtung 20 umfasst eine Mehrzahl von Kühlrohren 21, die innerhalb des Blechpakets 11 des Innenstators 12 angeordnet sind. Durch die Möglichkeit das Blechpakets 11 des Innenstators 12 beispielsweise aus Aluminium zu fertigen, erfolgt die Kühlung der direkt am Blechpakets 11 des Innenstators 12 angebundenen Permanentmagnete 12 besonders effizient, da Aluminium eine größere Wärmeleitfähigkeit aufweist als beispielsweise Eisen, aus dem das Blechpakets 11 üblicherweise gefertigt wird.

Die Kühlrohre 21 sind in Umfangsrichtung des Innenstators 12 gleichmäßig verteilt angeordnet und erstrecken sich entlang der axialen Richtung der elektrischen rotierenden Maschine 1. Die erste Kühleinrichtung 20 ist zur Kühlung der Permanentmagnete 12 vorgesehen.

Des Weiteren umfasst die elektrische Maschine 1 eine zweite Kühleinrichtung 22. Auch die zweite Kühleinrichtung 22 umfasst eine Mehrzahl von Kühlrohren 23, die sich entlang der axialen Richtung der elektrischen Maschine erstrecken. Auch die Kühlrohre 23 der zweiten Kühleinrichtung 22 entlang der Umfangsrichtung des Außenstators 2 sind gleichmäßig verteilt angeordnet. Die Kühlrohre 21, 23 können mit einem Kühlmedium, insbesondere einer Kühlflüssigkeit durchströmt sein. Mit der zweiten Kühleinrichtung können die Wicklungen 3 des Außenstators 2 gekühlt werden. Durch die erste Kühleinrichtung 20 kann die Wärme, die im Betrieb der elektrischen Maschine 1 entsteht, von dem Innenstator 10 abgeführt werden. Auf diese Weise kann verhindert werden, dass die Permanentmagneten 9 überhitzen und somit entmagnetisiert werden.

Des Weiteren weist die elektrische rotierende Maschine 1 eine zweite Kühleinrichtung 22 auf. Auch die zweite Kühleinrichtung 22 weist eine Mehrzahl von Kühlrohren 23, die sich entlang der axialen Richtung der elektrischen Maschine erstrecken, auf. Auch die Kühlrohre 23 der zweiten Kühleinrichtung 22 entlang der Umfangsrichtung des Außenstators 2 sind gleichmäßig verteilt angeordnet. Die Kühlrohre 21, 23 können mit einem Kühlmedium, insbesondere einer Kühlflüssigkeit durchströmt sein. Mit der zweiten Kühleinrichtung können die Wicklungen 3 des Außenstators 2 gekühlt werden. Durch die erste Kühleinrichtung 20 kann die Wärme, die im Betrieb der elektrischen Maschine 1 entsteht, von dem Innenstator 10 abgeführt werden. Auf diese Weise kann verhindert werden, dass die Permanentmagneten 9 überhitzen und somit entmagnetisiert werden.

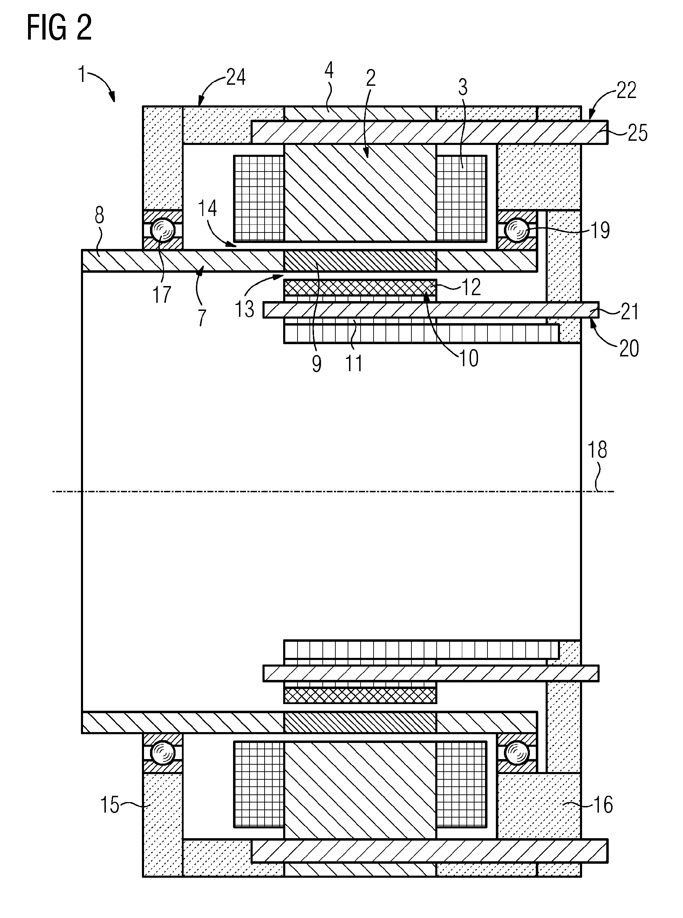

FIG 2 zeigt einen Längsschnitt der Ausführungsform der elektrischen rotierenden Maschine 1 gemäß FIG 1. Neben den oben beschriebenen Komponenten ist in FIG 2 ein Gehäuse 24 der elektrischen rotierenden Maschine 1 gezeigt. Das Gehäuse 24 weist einen ersten Flansch 15, welcher auch AS-Flansch genannt wird, und einen zweiten Flansch 16, welcher auch BS-Flansch genannt wird, auf. Zwischen dem ersten Flansch 15 und dem Rotor 7 ist ein erstes Lager 17 angeordnet, das beispielsweise als Kugellager ausgebildet ist. Zwischen dem zweiten Flansch 16 und dem Rotor 7 ist ein zweites Lagerelement 19 angeordnet, das ebenfalls als Kugellager ausgebildet sein kann. An den Rotor 7 ist eine Welle angeschlossen, welche nicht dargestellt ist.

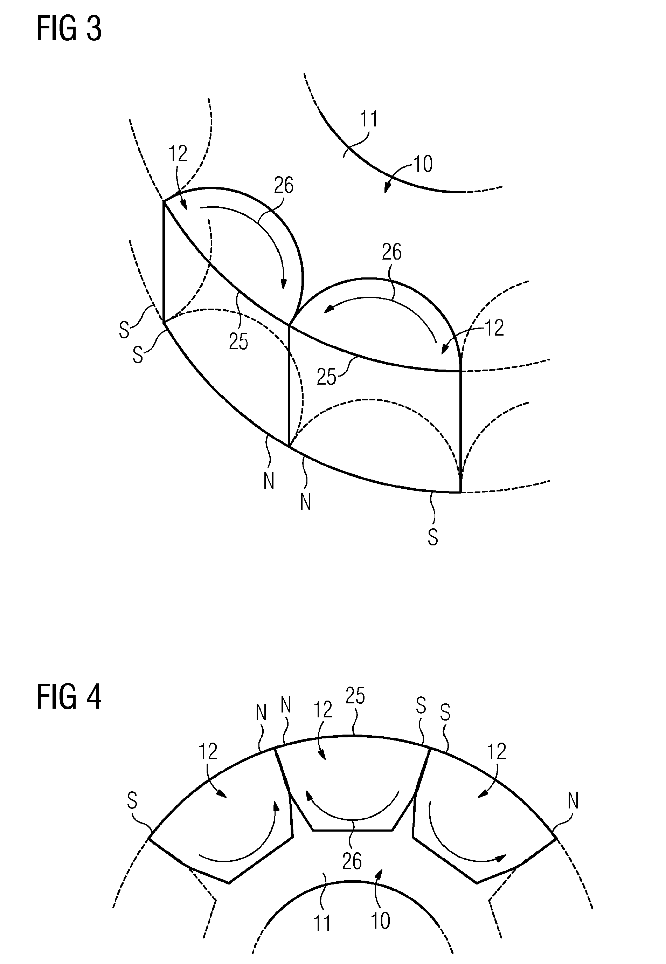

FIG 3 zeigt eine perspektivische Darstellung eines Teils eines Innenstators 12 mit linsenförmigen lateral magnetisierten Permanentmagneten 12. Die Linsenform, welche der Form einer bikonvexen Linse entspricht, ergibt sich aus der Tatsache, dass die Formgebung des dem inneren Luftspalt 13 zugewandten Abschnitts 25 und die Formgebung des dem Blechpaket 11 zugewandten Abschnitts rundlich sind, wobei der dem Blechpaket 11 zugewandte und dem inneren Luftspalt 13 abgewandte Abschnitt 25 der magnetischen Vorzugsrichtung 26 folgt. Die linsenförmigen lateral magnetisierten Permanentmagnete 12 des Innenstators 10 sind in Umfangsrichtung nahezu lückenlos angeordnet und bedecken die äußere tangentiale Oberfläche des Innenstators 10, welche der äußeren Mantelfläche eines aus den linsenförmigen lateral magnetisierten Permanentmagneten 12 und dem Blechpaket 11 gebildeten Hohlzylinder entspricht, nahezu komplett. An den Stoßbereichen der linsenförmigen lateral magnetisierten Permanentmagnete 12 sind die jeweiligen Nordpole N und Südpole S des Innenstators 10 angeordnet. Ein magnetischer Nordpol N oder Südpol S des Innenstators 10 wird durch zwei aneinander liegende gleichnamige Pole N, N oder S, S der Permanentmagnete 12 gebildet. Eine Schrägung und/oder Staffelung der magnetischen Pole, über die axiale Länge des Rotors 7 betrachtet, ist möglich.

FIG 4 zeigt einen Querschnitt eines Teils eines Innenstators 10 mit trapezförmigen lateral magnetisierten Permanentmagneten 12. Die Trapezform ergibt sich aus der Tatsache, dass die Formgebung des dem Blechpaket 11 zugewandten und dem inneren Luftspalt 13 abgewandten Abschnitts, beispielsweise aus Gründen der Herstellungsverfahren, trapezförmig ist. Entscheidend dabei ist auch hier, dass durch die laterale Magnetisierung der trapezförmigen Permanentmagneten 12 kein zusätzliches Rückschlussmaterial innerhalb des Innenstators 10 erforderlich ist, da sowohl die magnetische Polbildung als auch die Magnetfeldführung im Permanentmagneten 12 selbst erfolgt. Ein magnetischer Nordpol N oder Südpol S des Innenstators 10 wird auch hier durch zwei aneinander liegende gleichnamige Pole N, N oder S, S der Permanentmagnete 12 gebildet. Eine Schrägung und/oder Staffelung der magnetischen Pole, über die axiale Länge des Rotors 7 betrachtet, ist auch hier möglich.

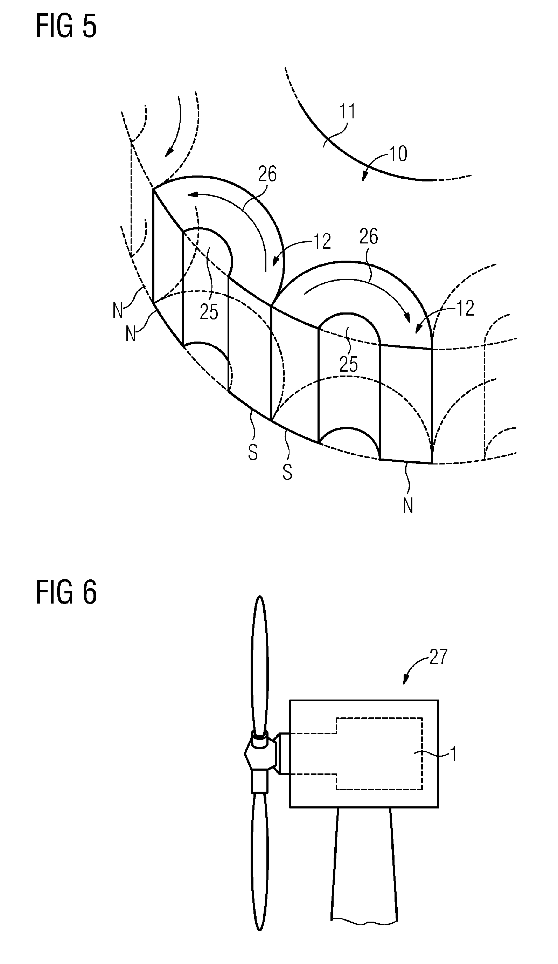

FIG 5 zeigt eine perspektivische Darstellung eines Teils eines Innenstators 10 mit schalenförmigen lateral magnetisierten Permanentmagneten 12. Diese weitere Ausführungsform eines lateral magnetisierten Permanentmagneten 12 unterscheidet sich von der in FIG 3 dargestellten Linsenform dadurch, dass sich zusätzlich am dem inneren Luftspalt 13 zugewandten Abschnitt 25 eine konkave Aussparung befindet woraus sich eine Schalenform des lateral magnetisierten Permanentmagneten 12 ergibt. Dabei bilden die Abschnitte links und rechts der Aussparung die rundliche Form des Innenstators 10. Ein magnetischer Nordpol N oder Südpol S des Innenstators 10 wird also auch hier durch zwei aneinander liegende gleichnamige Pole N, N oder S, S der Permanentmagnete 12 gebildet. Eine Schrägung und/oder Staffelung der magnetischen Pole, über die axiale Länge des Rotors 7 betrachtet, ist auch hier möglich.

FIG 6 zeigt einen Längsschnitt einer Gondel einer Windkraftanlage 27, wobei in der Windkraftanlage 27 eine Ausführungsform einer erfindungsgemäßen elektrischen rotierenden Maschine 1 zum Einsatz kommt. Dabei kann die als Generator eingesetzte elektrische rotierende Maschine 1 direkt (als Direktantrieb) oder über ein Getriebe angetrieben werden. Eine derartige elektrische rotierende Maschine 1 weist vorzugsweise eine Hochpoligkeit auf, die insbesondere für direkt angetriebene Generatoren wichtig ist und weist bevorzugt eine vergleichsweise hohe Luftspaltinduktion auf, was wiederum die Energieeffizienz der Windkraftanlage 27 steigert.

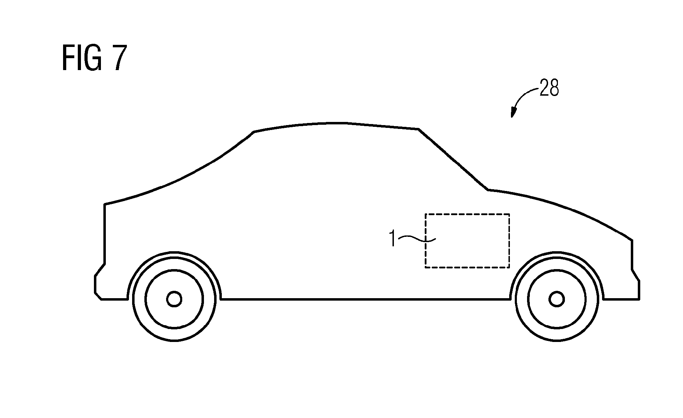

FIG 7 zeigt einen Längsschnitt eines elektrisch angetriebenen Fahrzeugs 28, wobei in dem Fahrzeug 28 eine Ausführungsform einer erfindungsgemäßen elektrischen rotierenden Maschine 1 zum Einsatz kommt. Dabei kann die als Motor eingesetzte elektrische rotierende Maschine 1 auch zusammen mit einem Verbrennungsmotor, beispielsweise in einem Hybridfahrzeug, zum Einsatz kommen.

Zusammenfassend betrifft die Erfindung eine elektrische rotierende Maschine 1 mit einem Außenstator 2, einem Innenstator 10, welcher konzentrisch zu dem Außenstator 2 innerhalb des Außenstators 2 angeordnet ist, einem Rotor 7 welcher konzentrisch zu dem Außenstator 2 und dem Innenstator 10 zwischen dem Außenstator 2 und dem Innenstator 10 angeordnet ist und welcher relativ zu dem Außenstator 2 und dem Innenstator 10 bewegbar ist und einem inneren Luftspalt 13, welcher zwischen dem Rotor 7 und dem Innenstator 10 angeordnet ist, wobei der Innenstator 10 eine Mehrzahl von Permanentmagneten 12 aufweist. Um, im Vergleich zum Stand der Technik, einen höheren Wirkungsgrad bei geringerer Masse und niedrigere Kosten zu erzielen, wird vorgeschlagen, dass jeder einzelne Permanentmagnet 12 auf der dem inneren Luftspalt 13 zugewandten Seite einen Nordpol N und einen Südpol S aufweist.

**Patentansprüche**

1. Elektrische rotierende Maschine (1) mit

   - einem Außenstator (2),
   - einem Innenstator (10), welcher konzentrisch zu dem Außenstator (2) innerhalb des Außenstators (2) angeordnet ist,
   - einem Rotor (7) welcher konzentrisch zu dem Außenstator (2) und dem Innenstator (10) zwischen dem Außenstator (2) und dem Innenstator (10) angeordnet ist und welcher relativ zu dem Außenstator (2) und dem Innenstator (10) bewegbar ist und
   - einem inneren Luftspalt (13), welcher zwischen dem Rotor (7) und dem Innenstator (10) angeordnet ist,

   wobei der Innenstator (10) eine Mehrzahl von Permanentmagneten (12) aufweist, **dadurch gekennzeichnet, dass** jeder einzelne Permanentmagnet (12) auf der dem inneren Luftspalt (13) zugewandten Seite einen Nordpol (N) und einen Südpol (S) aufweist.

2. Elektrische rotierende Maschine (1) nach Anspruch 1, **dadurch gekennzeichnet, dass** der Außenstator (2) eine Mehrzahl von Wicklungen (3) aufweist.

3. Elektrische rotierende Maschine (1) nach einem der Ansprüche 1 oder 2, **dadurch gekennzeichnet, dass** der Innenstator (10) ein Blechpaket (11) aufweist, welches aus einem Leichtmetall, insbesondere Aluminium, hergestellt ist.

4. Elektrische rotierende Maschine (1) nach Anspruch 3, **dadurch gekennzeichnet, dass** die Permanentmagnete (12) direkt mit dem Blechpaket (11) des Innenstators (10) verbunden sind.

5. Elektrische rotierende Maschine (1) nach einem der Ansprüche 1 bis 4, **dadurch gekennzeichnet, dass** die Permanentmagnete (12) des Innenstators (10) in Umfangsrichtung nahezu lückenlos angeordnet sind und die dem inneren Luftspalt (13) zugewandte Oberfläche des Innenstators (10) nahezu komplett bedecken.

**6.** Elektrische rotierende Maschine (1) nach einem der Ansprüche 1 bis 5, **dadurch gekennzeichnet, dass** die Permanentmagnete (12) linsenförmig, trapezförmig oder schalenförmig ausgeführt sind.

**7.** Elektrische rotierende Maschine (1) nach einem der Ansprüche 1 bis 6, **dadurch gekennzeichnet, dass** die Permanentmagnete (12) derartig ausgeführt sind, dass der vom inneren Luftspalt (13) abgewandte Abschnitt der Permanentmagnete (12) im Wesentlichen der magnetischen Vorzugsrichtung folgt.

**8.** Elektrische rotierende Maschine (1) nach einem der Ansprüche 1 bis 7, **dadurch gekennzeichnet, dass** der Rotor (7) ein Trägerelement (8) umfasst, welches aus einem amagnetischen Material hergestellt ist und eine Mehrzahl von Aussparungen aufweist, in denen jeweils ein weichmagnetisches Segment (9) angeordnet ist.

**9.** Elektrische rotierende Maschine (1) nach einem der Ansprüche 1 bis 8, **dadurch gekennzeichnet, dass** die Permanentmagnete (12) des Innenstators (10) aus einem Ferrit hergestellt sind.

**10.** Elektrische rotierende Maschine (1) nach einem der Ansprüche 1 bis 8, **dadurch gekennzeichnet, dass** die Permanentmagnete (12) des Innenstators (10) Eisen-Neodym-Bor enthalten.

**11.** Elektrische rotierende Maschine (1) nach einem der Ansprüche 1 bis 10, **dadurch gekennzeichnet, dass** die elektrische rotierende Maschine (1) eine erste Kühleinrichtung (20) zum Kühlen der Permanentmagnete (12) des Innenstators (10) aufweist.

**12.** Elektrische rotierende Maschine (1) nach einem der Ansprüche 1 bis 11, **dadurch gekennzeichnet, dass** die elektrische Maschine (1) eine zweite Kühleinrichtung (22) zum Kühlen des Außenstators (2) aufweist.

**13.** Elektrische rotierende Maschine (1) nach einem der Ansprüche 11 oder 12, **dadurch gekennzeichnet dass** die erste Kühleinrichtung (20) und/oder die zweite Kühleinrichtung (22) eine Mehrzahl von Kühlrohren (21, 23) aufweist, die von einer Kühlflüssigkeit durchströmt sind.

**14.** Windkraftanlage (27) mit einem Generator, wobei der Generator eine elektrische rotierende Maschine (1) nach einem der Ansprüche 1 bis 13 aufweist.

**15.** Antrieb für ein elektrisch angetriebenes Fluggerät oder ein elektrisch angetriebenes Fahrzeug (28) oder ein elektrisches Traktionsfahrzeug mit einer elektrischen rotierenden Maschine (1) nach einem der Ansprüche 1 bis 13.

FIG 1

FIG 2

FIG 3

FIG 4

## FIG 5

## FIG 6

FIG 7

**Europäisches Patentamt**
**European Patent Office**
**Office européen des brevets**

## EUROPÄISCHER RECHERCHENBERICHT

**Nummer der Anmeldung**

EP 15 16 2240

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | EP 2 770 616 A1 (SIEMENS AG [DE]) 27. August 2014 (2014-08-27) * Absatz [0027]; Abbildung 2 * ----- | 1-15 | INV. H02K21/40 H02K1/17 |
| Y | US 2012/217834 A1 (LUTZ JON [US] ET AL) 30. August 2012 (2012-08-30) * Absatz [0021]; Abbildungen 1,2,5,6,7 * ----- | 1,2, 8-10,14, 15 | ADD. H02K1/20 |
| Y | JP 2003 124019 A (YASKAWA ELECTRIC CORP) 25. April 2003 (2003-04-25) | 3-7, 11-13 | |
| A | * Abbildung 5 * ----- | 1 | |
| A | DE 10 2013 007563 A1 (MINEBEA CO LTD [JP]) 6. November 2014 (2014-11-06) * Absatz [0019]; Abbildung 7 * ----- | 1 | |
| A | EP 1 475 880 A2 (CORAC GROUP PLC [GB]) 10. November 2004 (2004-11-10) * Absatz [0021]; Abbildung 2 * ----- | 1 | |
| A | DE 27 56 626 A1 (PHILIPS PATENTVERWALTUNG) 21. Juni 1979 (1979-06-21) * Seite 6, Zeile 17 - Zeile 22; Abbildung 3 * * Seite 7, Zeile 1 - Zeile 8 * ----- | 1 | **RECHERCHIERTE SACHGEBIETE (IPC)** H02K |
| A | DE 25 50 702 A1 (VYZK VYVOJOVY USTAV ELEKTRIC) 18. Mai 1977 (1977-05-18) * Seite 4, Zeile 1 - Zeile 4; Abbildungen 1,2 * ----- | 3,4, 11-13 | |

Der vorliegende Recherchenbericht wurde für alle Patentansprüche erstellt

| Recherchenort | Abschlußdatum der Recherche | Prüfer |
|---|---|---|
| Den Haag | 21. September 2015 | Kovacsovics, Martin |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

..................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 15 16 2240

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-09-2015

| Im Recherchenbericht angeführtes Patentdokument | Datum der Veröffentlichung | Mitglied(er) der Patentfamilie | Datum der Veröffentlichung |
|---|---|---|---|
| EP 2770616 A1 | 27-08-2014 | EP 2770616 A1<br>WO 2014127855 A1 | 27-08-2014<br>28-08-2014 |
| US 2012217834 A1 | 30-08-2012 | CA 2828527 A1<br>EP 2681829 A2<br>JP 2014511669 A<br>US 2012217834 A1<br>WO 2012118787 A2 | 07-09-2012<br>08-01-2014<br>15-05-2014<br>30-08-2012<br>07-09-2012 |
| JP 2003124019 A | 25-04-2003 | KEINE | |
| DE 102013007563 A1 | 06-11-2014 | KEINE | |
| EP 1475880 A2 | 10-11-2004 | EP 1475880 A2<br>US 2004222713 A1 | 10-11-2004<br>11-11-2004 |
| DE 2756626 A1 | 21-06-1979 | KEINE | |
| DE 2550702 A1 | 18-05-1977 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2528207 A1
- EP 14163031 A

- EP 14183004 A